Europäisches Patentamt

European Patent Office

Office européen des brevets

(19)

(11) Veröffentlichungsnummer: **0 459 147 B1**

(12) **EUROPÄISCHE PATENTSCHRIFT**

(45) Veröffentlichungstag der Patentschrift: **15.11.95**

(51) Int. Cl.6: **C08J 9/16**, //C08L25/00

(21) Anmeldenummer: **91106672.8**

(22) Anmeldetag: **25.04.91**

(54) **Expandierbare Styrolpolymerisate.**

(30) Priorität: **04.05.90 DE 4014261**

(43) Veröffentlichungstag der Anmeldung:
**04.12.91 Patentblatt 91/49**

(45) Bekanntmachung des Hinweises auf die
Patenterteilung:
**15.11.95 Patentblatt 95/46**

(84) Benannte Vertragsstaaten:
**AT BE DE ES FR GB IT NL**

(56) Entgegenhaltungen:
FR-A- 2 115 859
JP-A-59 109 532

WORLD PATENTS INDEX LATEST Week 8431,
25. Juni 1984Derwent Publications Ltd., London, GB; AN 84-192381 & JP-A-59 109 532
(SEKISUI PLASTICS K.K.)

WORLD PATENTS INDEX LATEST Week 8932,
4. Juli 1989 DerwentPublications Ltd., London, GB; AN 89-232326 & JP-A-1168 702 (MITSUBISHI RAYON K.K.) 4. Juli 1989

(73) Patentinhaber: **BASF Aktiengesellschaft**
**Carl-Bosch-Strasse 38**
**D-67063 Ludwigshafen (DE)**

(72) Erfinder: **Wittenberg, Dietmar, Dr.**
**Rheindammstrasse 28**
**W-6800 Mannheim 1 (DE)**
Erfinder: **Hahn, Klaus, Dr.**
**Im Buegen 9**
**W-6719 Kirchheim (DE)**
Erfinder: **Guhr, Uwe, Dr.**
**Beim Hochgericht 9**
**W-6718 Gruenstadt (DE)**
Erfinder: **Hintz, Hans, Dr.**
**Wolframstrasse 4**
**W-6700 Ludwigshafen (DE)**
Erfinder: **O'Callaghan, Michael P., Dr.**
**72 Jaques Avenue**
**Staten Island, N.Y. 10306 (DE)**
Erfinder: **Riethues, Michael, Dr.**
**Pielachtalstrasse 20**
**W-6700 Ludwigshafen (DE)**

## Beschreibung

Die Erfindung betrifft expandierbare Styrolpolymerisate, die geringe Mengen eines Wasser absorbierenden organischen Polymeren enthalten.

Expandierbare Styrolpolymerisate werden großtechnisch durch Suspensionspolymerisation hergestellt. Dabei werden Polymerisatperlen erhalten, die einen Innenwassergehalt von bis zu etwa 2 Gew.-% enthalten. Beim Lagern tritt das Wasser allmählich aus den Perlen aus und führt zu einer unbefriedigenden Rieselfähigkeit des Produkts. Es ist daher erforderlich, durch eine sorgfältige Langzeittrocknung den Wassergehalt drastisch zu reduzieren, um ein lagerstabiles Produkt zu erhalten. Dabei geht aber gleichzeitig ein Teil des leicht flüchtigen Treibmittels verloren. Nun ist aber das im expandierbaren Styrolpolymerisat enthaltene Wasser prinzipiell als Treibmittel wirksam, so daß es wünschenswert wäre, den Wassergehalt zu erhöhen, um entweder die Menge der als Treibmittel verwendeten niedrigsiedenden Kohlenwasserstoffe zu erniedrigen oder bei gleicher Treibmittelmenge die Expandierbarkeit zu erhöhen.

Der vorliegenden Erfindung lag die Aufgabe zugrunde, die Rieselfähigkeit von expandierbarem Polystyrol zu erhöhen. Eine weitere Aufgabe bestand darin, ein expandierbares Polystyrol zu entwickeln, bei dessen Herstellung eine Langzeittrocknung nicht erforderlich ist. Schließlich war die Aufgabe zu lösen, den Gehalt an organischen Treibmitteln in expandierbarem Polystrol zu reduzieren und damit die Umweltbelastung bei der Schaumstoffherstellung zu reduzieren.

Es wurde nun überraschenderweise gefunden, daß diese Aufgaben gelöst werden durch die Mitverwendung von geringen Mengen eines Wasser absorbierenden organischen Polymeren.

Gegenstand der Erfindung sind somit expandierbare Styrolpolymerisate, enthaltend
a) ein Styrolpolymerisat,
b) 0,05 bis 3 Gew.-%, bezogen auf a), Wasser,
c) 0,001 bis 1 Gew.-%, bezogen auf a), eines feinteiligen organischen Polymeren mit einem Wasseraufnahmevermögen von mindestens 10 g/g,
d) 0,5 bis 8 Gew.-%, bezogen auf a), eines $C_3$- bis $C_6$-Kohlenwasserstoffs und gegebenenfalls
e) übliche Zusatzstoffe in wirksamen Mengen.

Gegenstand der Erfindung sind weiterhin Styrolpolymerisat-Schaumstoffe der Dichte 0,01 bis 0,1 g/cm³, enthaltend 0,001 bis 1 Gew.-% eines feinteiligen organischen Polymeren mit einem Wasseraufnahmevermögen von mindestens 10 g/g, herstellbar, indem man expandierbare Styrolpolymerisate der ge nannten Zusammensetzung in an sich bekannter Weise durch Erhitzen auf eine Temperatur oberhalb ihres Erweichungspunktes expandiert und die erhaltenen Schaumstoffpartikel in nicht gasdicht schließenden Formen durch Erhitzen miteinander verschweißt.

Als Hauptkomponente a) enthalten die neuen Produkte Polystyrol und/oder ein Styrolcopolymerisat mit mindestens 50 Gew.-%, vorzugsweise mindestens 80 Gew.-% einpolymerisiertem Polystyrol. Als Comonomere kommen z.B. in Frage α-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylcarbazol und Maleinsäure(anhydrid). Vorteilhaft kann das Polystyrol eine geringe Menge eines Kettenverzweigers einpolymerisiert enthalten, d.h. einer Verbindung mit mehr als einer, vorzugsweise zwei Doppelbindungen, wie Divinylbenzol, Butadien oder Butandioldiacrylat. Der Verzweiger wird im allgemeinen in Mengen von 0,005 bis 0,05 Mol.-%, bezogen auf Styrol, verwendet.

Vorteilhaft verwendet man Styrolpolymerisate mit Molekulargewichten und Molgewichtsverteilung, wie sie in der EP-B 106 129 und der DE-A 39 21 148 beschrieben sind.

Auch Mischungen verschiedener Styrolpolymerisate können verwendet werden, wie sie beispielsweise in der DE-A 39 01 329, 39 08 238, 39 36 596, 39 31 862 und 39 16 602 beschrieben sind.

Als Komponente b) enthalten die neuen expandierbaren Styrolpolymerisate 0,05 bis 3, vorzugsweise 0,2 bis 2,5 und insbesondere 0,3 bis 1,5 Gew.-% Wasser, welches im allgemeinen in feinverteilter Form im Polymeren vorliegt.

Als erfindungswesentliche Komponente c) enthalten die neuen expandierbaren Styrolpolymerisate 0,001 bis 1, vorzugsweise 0,002 bis 0,5, insbesondere 0,05 bis 0,2 Gew.-% eines feinteiligen organischen Polymeren mit einem Wasseraufnahmevermögen von mindestens 10 g/g, im allgemeinen zwischen 10 und 100 g/g, vorzugsweise zwischen 20 und 80 g/g. Die Bestimmung der Wasseraufnahme erfolgt durch Behandeln mit physiologischer Kochsalzlösung, die 0,9 % Natriumchlorid enthält.

Das organische Polymere wird im allgemeinen mit einer mittleren Teilchengröße zwischen 1 und 100 μm verwendet.

Geeignete wasserabsorbierende organische Polymere, auch als Superabsorber bezeichnet, sind beispielsweise vernetzte oder teilvernetzte (d.h. zu etwa 10 bis 90 % vernetzte) organische Polymere mit 40 bis 62 Gew.-%, vorzugsweise 50 bis 62 Gew.-% Carboxylgruppen, die gegebenenfalls ganz oder teilweise neutralisiert sind, wie Polyacrylsäure, Polymethacrylsäure und Copolymere auf Basis von Acrylsäure und/oder Methacrylsäure, die gegebenenfalls untergeordnete Mengen an anderen copolymerisierbaren Monomeren, wie (Meth)acrylsäureester, (Meth)acrylsäureamide, Vinylester, Styrol und dergl. enthalten. Zur Erzielung einer Verzweigung des Polymeren werden im allgemeinen bei der Polymerisation geringe Mengen, beispielsweise 0,001 bis 1 Mol.-% eines mindestens zwei ethylenisch ungesättigte Doppelbindungen enthaltenden Monomeren mitverwendet.

Vorteilhaft liegen die Carboxylgruppen enthaltenden Polymeren zu 10 bis 100 %, insbesondere zu 50 bis 100 % neutralisierter Form vor, vorzugsweise als Alkalimetallsalz. Derartige Polymere und Verfahren zu ihrer Herstellung sind u.a. beschrieben in US-PS 4 286 082, US-PS 4 769 427, GB-A-2 146 342 und DE-A-38 43 780.

Als Komponente d) enthalten die expandierbaren Styrolpolymerisate als übliches Treibmittel 0,5 bis 8, vorzugsweise 1 bis 5 Gew.-%, bezogen auf a), eines $C_3$- bis $C_6$-Kohlenwasserstoffs, wie Propan, n-Butan, Isobutan, n-Pentan, Isopentan, Neopentan und/oder Hexan. Vorzugsweise wird ein handelsübliches Pentan-Isomerengemisch verwendet.

Als Komponente c) können die expandierbaren Styrolpolymerisate übliche Hilfsstoffe, wie Farbstoffe, Pigmente, Füllstoffe, Stabilisatoren, Flammschutzmittel, Synergisten, Keimbildner, Gleitmittel, und dergleichen in üblichen wirksamen Mengen enthalten.

Als Zusatzstoffe sind auch Poly-(2,6-dimethyl)-1,4-phenylenether und Poly-1,4-phenylensulfid geeignet (vgl. DE-A-39 04 370 und DE-A-39 24 868). Diese Zusätze bewirken eine Erhöhung der Wärmeformbeständigkeit des Schaumstoffs. Geeignete Zusatzstoffe sind auch styrollösliche Elastomere (vgl. DE-A-39 15 602), die die Elastizität des Schaumstoffs erhöhen.

Die erfindungswesentliche Komponente c) kann entweder in der Komponente a) gleichmäßig verteilt vorliegen. In dieser Form bindet sie die in der Styrolpolymerisatphase eingeschlossenen geringen Wassermengen und verhindert ein Ausschwitzen des Wassers an die Teilchenoberfläche. Das Wasser kann somit beim Aufschäumen auch als Treibmittel wirksam werden. Die Komponente c) kann aber auch als Oberflächenbeschichtung vorliegen. In dieser Form bindet sie das beim Lagern aus den Styrolpolymerisatteilchen ausschwitzende Wasser und verhindert ein Verkleben der Partikel und erhöht die Rieselfähigkeit. Die Komponente c) kann aber auch nur teilweise in der Komponente a) gleichmäßig verteilt und teilweise als Oberflächenbeschichtung vorliegen.

Die expandierbaren Styrolpolymerisate liegen im allgemeinen in Partikelform, insbesondere in Perlform vor, vorteilhaft mit einem mittleren Durchmesser von 0,05 bis 6 mm, insbesondere 0,4 bis 3 mm. Die Herstellung erfolgt in an sich bekannter Weise durch Suspensionspolymerisation. Dazu wird Styrol, gegebenenfalls unter Zusatz weiterer Comonomerer in wäßriger Suspension in Gegenwart eines üblichen Suspensionsstabilisators mittels radikalbildender Katalysatoren polymerisiert. Vorteilhaft setzt man bei der Polymerisation einen Regler und/oder einen Kettenverzweiger zu, beispielsweise in einer Menge von 0,005 bis 0,05 Mol.-%. Das Treibmittel und gegebenenfalls die Zusatzstoffe können dabei bei der Polymerisation mit vorgelegt werden oder im Laufe der Polymerisation oder nach beendeter Polymerisation dem Ansatz zugefügt werden. Die Zugabe der erfindungsgemäßen Komponente c) erfolgt zweckmäßig zur Styrolphase vor Polymerisationsbeginn und/oder nach beendeter Polymerisation durch Beschichtung der Polymerisatpartikel.

Die erhaltenen perlförmigen expandierbaren Styrolpolymerisate werden nach beendeter Polymerisation von der wäßrigen Phase abgetrennt, gewaschen und getrocknet und gegebenenfalls beschichtet.

Für die Herstellung von Schaumstoffen werden die expandierbaren Styrolpolymerisate in bekannter Weise durch Erhitzen auf Temperaturen oberhalb ihres Erweichungspunkts, beispielsweise mit Heißluft oder vorzugsweise mit Dampf expandiert. Die erhaltenen Schaumstoffpartikel können nach dem Abkühlen und gegebenenfalls einer Zwischenlagerung durch erneutes Erhitzen weiter aufgeschäumt werden. Sie können anschließend in bekannter Weise in nicht gasdicht schließende Formen zu Formteilen verschweißt werden.

Die erhaltenen Schaumstoffe weisen im allgemeinen eine Dichte von etwa 0,01 bis 0,1 $g/cm^3$ auf. Sie finden Verwendung u.a. als Wärme- und Schalldämmstoffe, als Polstermaterial und für stoßdämpfende Verpackungen. Die Schaumstoffe zeichnen sich durch eine stark verminderte Neigung zur elektrostatischen Aufladung aus.

Die in den Beispielen genannten Teile sind Gewichtsteile.

Beispiele

In einem druckfesten Rührgefäß wurde eine Mischung aus 150 Teilen Wasser, 0,1 Teilen Natriumpyrophosphat, 100 Teilen Styrol, in dem die in der Tabelle angegebenen Mengen an Polyacrylsäure suspendiert sind, die zu 80 % als Natriumsalz vorliegt, mit einem Vernetzungsgrad von ca. 88 %, einem Wasseraufnahmevermögen, gemessen in physiologischer Kochsalzlösung, von ca. 45 g/g und einer Teilchengröße kleiner als 80 $\mu$m (Luquasorb HC 9797 der BASF Aktiengesellschaft in feinpulverisierter Form), 0,45 Teile Benzoylperoxid, 0,15 Teile tert.-Butylperbenzoat und die in der Tabelle angegebenen Mengen an n-Pentan unter Rühren auf 90 °C erhitzt. Nach 2 Stunden bei 90 °C wurden 4 Teile einer 10 %igen wäßrigen Lösung von Polyvinylpyrrolidon als Suspensionsstabilisator zugefügt. Dann wurde 2 weitere Stunden bei 90°C, anschließend 2 Stunden bei 100°C und schließlich 2 Stunden bei 120°C gerührt.

Nach dem Abkühlen auf Raumtemperatur wurde das erhaltene Perlpolymerisat (mittlerer Teilchendurchmesser 1,5 mm) abgetrennt, gewaschen und dann durch Blitztrocknung von anhaftendem Oberflächenwasser befreit.

Das perlförmige expandierbare Polymerisat wurde anschließend durch 3 Minuten dauerndes Auftrommeln in einem Schaufelmischer (Typ Lödige) mit den in der Tabelle angeführten Mengen an Luquasorb LC 9797 beschichtet.

Zur Bestimmung des Rieselverhaltens wurden jeweils 1 kg der Perlpolymerisate zunächst 48 h in einem geschlossenen Glasgefäß gelagert. Anschließend wurde die Auslaufzeit der Produkte durch einen Trichter aus geglättetem $V_2A$-Stahl gemessen. Der Durchmesser des Trichters beträgt bei einem Neigungswinkel von 45° 250 mm an der Einfüllstelle und 20 mm am Auslauf. Zur Messung der Rieselfähigkeit wird der Auslauf des Trichters verschlossen und 1 kg der Polymerisate mit einer Perlgröße von 1,0-2,0 mm eingefüllt. Anschließend wird der Auslauf geöffnet und die Zeit ermittelt, in der der Trichter leergelaufen ist. Die erhaltenen Ergebnisse sind in der Tabelle zusammengestellt.

Zur Untersuchung der Verklebung beim Vorschäumen diente ein mit einem Metallrahmen eingefaßtes Sieb (Maschenweite: 0,1-0,2 mm) mit den Abmessungen 1000x800x250 mm, welches sich in einem abgeschlossenen Metallgehäuse mit Dampfzuleitung und Dampfabzugsvorrichtung befand. Der Wasserdampf von 120°C strömte von unten in die Vorschäumapparatur ein, passierte das Drahtgewebe mit den zu prüfenden Produkten und konnte durch die Dampfabzugsvorrichtung wieder entweichen. Vor Beginn der Prüfungen wurde die Apparatur zunächst ca. 5 min vorgeheizt. Anschließend wurden 500 g der expandierbaren Perlpolymerisate mit einem Teilchendurchmesser zwischen 1,0 und 2,0 mm auf dem Drahtgewebe gleichmäßig verteilt, die Apparatur geschlossen und das Dampfventil geöffnet. Nach der in der Tabelle angegebenen Zeit wurde das Dampfventil wieder geschlossen und das Metallgehäuse geöffnet. Von dem vorgeschäumten Material wurde anschließend die Schüttdichte bestimmt und die Verklebung beurteilt.

Die Stärke der Verklebung wurde durch folgende Gruppen gekennzeichnet:

0: nicht verklebt :

= keinerlei Agglomerate

1: leicht verklebt:

= Perlen schwach verklebt, die Agglomerate sind jedoch durch leichte Schläge mit der flachen Hand aufzulösen

2: mäßig verklebt:

= durchweg aus Agglomeraten bestehend, die noch ohne Schwierigkeit mit der Hand zerbröckelt werden können

3: stark verklebt:

= die Agglomerate sind so stabil, daß sie mit der Hand nur schwierig und unter starker Deformation der Perlen zerkleinert werden können

4: sehr stark verklebt

= die aufgeschäumten Partikel sind völlig miteinander verschweißt.

Die Bestimmung des Wassergehaltes erfolgte mit einem Karl-Fischer-Titrierautomaten E 452 der Firma Metrohm AG, Herisau (Schweiz).

Die erhaltenen Ergebnisse sind in der Tabelle zusammengefaßt.

| Beispiel Nr. | 1 Vergleich | 2 Vergleich | 3 | 4 | 5 | 6 | 7 | 8 | 9 |
|---|---|---|---|---|---|---|---|---|---|
| Luquasorb HC 9797 [Gew.-%] (inkorporiert) | - | 0,005 | 0,01 | 0,005 | 0,005 | 0,01 | - | - | 0,05 |
| Luquasorb HC 9797 [Gew.-%] (beschichtet) | - | - | - | 0,02 | 0,1 | 0,1 | 0,04 | 1,0 | - |
| n-Pentan [Gew.-%] | 7 | 7 | 5 | 7 | 4 | 7 | 7 | 7 | 4 |
| Wassergehalt [Gew.-%] | 0,5 | 0,7 | 0,8 | 0,7 | 0,7 | 0,8 | 0,5 | 0,5 | 1,9 |
| Rieselverhalten [sec/kg] | blockt | 40 | 35 | 30 | 23 | 20 | 30 | 22 | 25 |
| Vorschäumdauer [min] | 6 | 6 | 6 | 6 | 6 | 6 | 6 | 6 | 6 |
| Schüttdichte [g/cm³] | 13,5 | 12,9 | 13,0 | 12,8 | 12,7 | 12,8 | 12,9 | 12,5 | 11,5 |
| Verklebung [Note 0-4] | 3-4 | 2-3 | 2 | 2 | 1-2 | 1 | 2-3 | 2 | 1-2 |

**Patentansprüche**

1. Expandierbare Styrolpolymerisate, enthaltend
   a) ein Styrolpolymerisat,

b) 0,05 bis 3 Gew.-%, bezogen auf a), Wasser,

c) 0,001 bis 1 Gew.-%, bezogen auf a), eines feinteiligen organischen Polymeren mit einem Wasseraufnahmevermögen von mindestens 10 g/g,

d) 0,5 bis 8 Gew.-%, bezogen auf a), eines $C_3$- bis $C_6$-Kohlenwasserstoffs und gegebenenfalls

e) übliche Zusatzstoffe in wirksamen Mengen.

2. Expandierbare Styrolpolymerisate nach Anspruch 1, enthaltend als Komponente c) ein vernetztes oder teilvernetztes organisches Polymeres mit 40 bis 62 Gew.-% Carboxylgruppen, die gegebenenfalls durch Salzbildung ganz oder teilweise neutralisiert sind.

3. Expandierbare Styrolpolymerisate nach Anspruch 2, enthaltend als Komponente c) vernetzte oder teilvernetzte Polyacrylsäure, deren Carboxylgruppen zu mindestens 50 % als Alkalimetallsalz vorliegen.

4. Expandierbare Styrolpolymerisate nach einem der Ansprüche 1 bis 3, bei denen die Komponente c) eine mittlere Teilchengröße von 1 bis 50 μm aufweist.

5. Expandierbare Styrolpolymerisate nach einem der Ansprüche 1 bis 4, bei denen die Komponente c) zumindest teilweise in der Komponente a) gleichmäßig verteilt vorliegt.

6. Expandierbare Styrolpolymerisate nach einem der Ansprüche 1 bis 4, bei denen die Komponente c) zumindest teilweise als Oberflächenbeschichtung vorliegt.

7. Verfahren zur Herstellung expandierbarer Styrolpolymerisate gemäß einem der Ansprüche 1 bis 5, dadurch gekennzeichnet, daß man eine Mischung aus Styrol und gegebenenfalls weiteren Comonomeren und der Komponente c) in wäßriger Suspension polymerisiert und vor, während oder nach der Polymerisation die Komponente d) und gegebenenfalls e) zufügt.

8. Verfahren zur Herstellung expandierbarer Styrolpolymerisate gemäß Anspruch 6, dadurch gekennzeichnet, daß man durch Suspensionspolymerisation hergestellte perlförmige expandierbare Styrolpolymerisate, enthaltend die Komponenten a), b), d) und gegebenenfalls c) und/oder e) mit der Komponente c) an ihrer Oberfläche beschichtet.

9. Styrolpolymerisat-Schaumstoffe der Dichte 0,01 bis 0,1 g/cm$^3$, enthaltend 0,001 bis 1 Gew.-% eines feinteiligen organischen Polymeren mit einem Wasseraufnahmevermögen von mindestens 10 g/g, herstellbar, indem man expandierbare Styrolpolymerisate gemäß einem der Ansprüche 1 bis 6 in an sich bekannter Weise durch Erhitzen auf eine Temperatur oberhalb ihres Erweichungspunktes expandiert und die erhaltenen Schaumstoffpartikel in nicht gasdicht schließenden Formen durch Erhitzen miteinander verschweißt.

10. Verfahren zur Herstellung von Styrolpolymerisat-Schaumstoffen gemäß Anspruch 9, dadurch gekennzeichnet, daß man expandierbare Styrolpolymerisate gemäß einem der Ansprüche 1 bis 6 in an sich bekannter Weise durch Erhitzen auf eine Temperatur oberhalb des Erweichungspunktes expandiert und die erhaltenen Schaumstoffpartikel in nicht gasdicht schließenden Formen durch Erhitzen miteinander verschweißt.

## Claims

1. An expandable styrene polymer containing
   a) a styrene polymer,
   b) from 0.05 to 3 % by weight, based on a), of water,
   c) from 0.001 to 1 % by weight, based on a), of a finely divided organic polymer having a water absorption capacity of 10 g/g or more,
   d) from 0.5 to 8 % by weight, based on a), of a $C_3$- to $C_6$-hydrocarbon, and, if desired,
   e) conventional additives in effective amounts.

2. An expandable styrene polymer as claimed in claim 1, containing, as component c), a crosslinked or partially crosslinked organic polymer containing from 40 to 62 % by weight of carboxyl groups, all or some of which may have been neutralized by salt formation.

3. An expandable styrene polymer as claimed in claim 2, containing, as component c), crosslinked or partially crosslinked polyacrylic acid in which 50 % or more of the carboxyl groups are in the form of alkali metal salts.

4. An expandable styrene polymer as claimed in claim 1 or 2 or 3, in which component c) has a mean particle size of from 1 to 50 $\mu$m.

5. An expandable styrene polymer as claimed in claim 1 or 2 or 3 or 4, in which at least some of component c) is uniformly distributed in component a).

6. An expandable styrene polymer as claimed in claim 1 or 2 or 3 or 4, in which at least some of component c) is in the form of a surface coating.

7. A process for the preparation of an expandable styrene polymer as claimed in claim 1 or 2 or 3 or 4 or 5, which comprises polymerizing a mixture of styrene and, if desired, further comonomers and component c) in aqueous suspension, and adding component d) and, if used, e) before, during or after the polymerization.

8. A process for the preparation of an expandable styrene polymer as claimed in claim 6, which comprises coating component c) onto the surface of a bead-form expandable styrene polymer prepared by suspension polymerization and containing components a), b), d) and, if used, c) and/or e).

9. A styrene polymer foam having a density of from 0.01 to 0.1 g/cm$^3$ and containing from 0.001 to 1 % by weight of a finely divided organic polymer having a water absorption capacity of 10 g/g or more, which can be produced by expanding a styrene polymer as claimed in claim 1 or 2 or 3 or 4 or 5 or 6 in a conventional manner by heating to above its softening point, and welding the resultant foam particles to one another by heating in a mold which does not close in a gas-tight manner.

10. A process for the production of a styrene polymer foam as claimed in claim 9, which comprises expanding a styrene polymer as claimed in claim 1 or 2 or 3 or 4 or 5 or 6 in a conventional manner by heating to above the softening point, and welding the resultant foam particles to one another by heating in a mold which does not close in a gas-tight manner.

## Revendications

1. Polymères de styrolène expansibles contenant
   a) un polymère de styrolène
   b) 0,05 à 3 % en poids, rapportés à a), d'eau
   c) 0,001 à 1 % en poids, rapportés à a), d'un polymère organique finement réparti d'un pouvoir hygroscopique d'au moins 10/g/g
   d) 0,5 à 8 % en poids, rapportés à a) d'un hydrocarbure en C3 à C6 et éventuellement

e) des additifs usuels en quantité efficaces.

**2.** Polymères de styrolène expansibles selon la revendication 1 contenant, comme composant c), un polymère organique réticulé ou partiellement réticulé, de 40 à 62 % en poids de groupes carboxyle qui sont éventuellement totalement ou partiellement neutralisés par salification.

**3.** Polymères de styrolène expansibles selon la revendication 2, contenant, comme composé c), des acides polyacryliques réticulés ou partiellement réticulés dont les groupes carboxyle se présentent, pour au moins 50 %, sous forme de sel de métal alcalin.

**4.** Polymères de styrolène expansibles selon l'une des revendications 1 à 3, dont les composants c) ont une grosseur moyenne de particules de 1 à 50 $\mu$m.

**5.** Polymères de styrolène expansibles selon l'une des revendications 1 à 4, dont les composants c) se présentent, au moins partiellement, répartis uniformément dans les composants a).

**6.** Polymères de styrolène expansibles selon l'une des revendications 1 à 4, dont les composants c) se présentent, au moins partiellement, sous forme de revêtement superficiel.

**7.** Procédé de préparation de polymères de styrolène expansibles selon l'une des revendications 1 à 5, caractérisé par le fait que l'on polymérise en suspension aqueuse un mélange de styrolène et éventuellement autres comonomères et de composant c) et avant, pendant ou après la polymérisation on ajoute le composant d) et éventuellement e).

**8.** Procédé de préparation de polymères de styrolène expansibles selon la revendication 6, caractérisé par le fait que l'on revêt du composant c) la surface d'un polymère de styrolène expansible en forme de perles préparé par polymérisation en suspension et contenant les composants a), b), d) et éventuellement c) et/ou e).

**9.** Matière alvéolaire de polymère de styrolène d'une densité de 0,01 à 0,1 $g/cm^3$, contenant 0,001 à 1 % en poids d'un polymère organique finement réparti avec une capacité hygroscopique d'au moins 10 g/g, préparable en expansant un polymère de styrolène expansible selon l'une des revendications 1 à 6, de manière connue en soit, par chauffage à une température supérieure à son point de ramollissement et en soudant entre elles par chauffage les particules de matière alvéolaire obtenues, sous forme n'assurant pas resserrement d'étanchéité au gaz.

**10.** Procédé de préparation de matière alvéolaire de polymère de styrolène selon la revendication 9, caractérisé par le fait que l'on expanse un polymère de styrolène expansible selon l'une des revendications 1 à 6, de manière connue en soit, par chauffage à une température supérieure à son point de ramollissement et en soudant entre elles par chauffage les particules de matière alvéolaire obtenues, sous forme n'assurant pas resserrement d'étanchéité au gaz.